# DEMANDE DE BREVET EUROPEEN

(11) **EP 2 361 804 A1**
(43) Date de publication de la demande: **31.08.2011**
(21) Numéro de dépôt: 11305195.7
(22) Date de dépôt: 24.02.2011
(51) Int. Cl.: B60P 1/02, B60P 1/48

(54) **Dispositif de manutention d'un sac de chantier de grande contenance de type dit "big bag"**

(30) Priorité: 26.02.2010 FR 1051413
(71) Demandeur: Flix, Jean-Marie, 10120 Saint Germain (FR)
(72) Inventeur: Flix, Jean-Marie, 10120 Saint Germain (FR)
(74) Mandataire: Rhein, Alain

(57) **Abrégé**

Dispositif (1) de manutention et de transport d'un sac (2) de chantier de grande contenance de type dit "big bag", constitué d'une remorque (3) pourvue, d'une part, de moyens de levage (7) du sac (2) et, d'autre part, de moyens de réception (6) du sac (2) en chargement sur la remorque (3), les moyens de levage (7) étant motorisés pour lever le sac (2) et le déposer sur les moyens de réception (6), et inversement,.

Les moyens de réception (6) sont mobiles par rapport au châssis (4), de manière à passer d'une position escamotée à une position de réception, et inversement, et la remorque (3) comporte des moyens latéraux (43, 50) de maintien du sac (2), de manière à entourer le sac (2) en chargement, et le maintenir latéralement pendant son transport.

## Description

La présente invention entre dans le domaine du transport et de la manutention de charge.

L'invention concerne plus particulièrement un dispositif de manutention et de transport d'une charge contenue dans un sac de chantier de grande contenance, de type dit « big bag ».

On notera qu'au sens de l'invention, un sac de type dit big bag est communément utilisé sur les chantiers de manière à faciliter le transport de matériaux en vrac. En effet, un tel sac comprend une enveloppe en matériau tissé de manière à améliorer sa résistance, notamment contre l'arrachement. Cette enveloppe est ouverte en partie supérieure et comprend des anses au niveau de ses bords périphériques. Habituellement ces anses peuvent être au nombre de un ou deux, souvent quatre, et sont généralement formées par des sangles directement cousues sur le tissu dont est faite ladite enveloppe. Un tel sac peut aussi comprendre une ouverture inférieure pour le vider entièrement lorsqu'il se trouve suspendu par ses anses.

L'intérêt d'un tel sac est de faciliter le transport et la manutention de charges en vrac, ainsi que son stockage lorsqu'il est vide. La manutention de ces sacs est généralement effectuée par l'intermédiaire de moyens de levage tels qu'une grue, un bras articulé ou un élévateur solidaire d'un engin de chantier, tandis que le transport est réalisé sur la plateforme d'un véhicule.

Il existe de nombreux dispositifs utilisés pour le transport, le chargement et déchargement de sacs de type big bag, bien que ces dispositifs ne soient pas à l'origine conçus pour une telle utilisation.

Le document FR 2 802 905 décrit un engin de transbordement dans lequel on vient prendre un conteneur au travers d'un bras hydraulique pour le déplacer d'un lieu de stockage sur un véhicule de transport ou un wagon de train de marchandises.

Un tel dispositif est encombrant et couteux, en effet sur un chantier il n'y a pas toujours la place pour faire circuler un tel engin au milieu d'un chantier. De plus, cela oblige à soulever le conteneur très haut pour venir le placer sur la remorque du camion. Il n'est donc pas adapté au transbordement de sac de type dit big bag.

On notera de plus qu'il existe plusieurs modèles de sacs dits big bag, ceux de petite hauteur, qui sont de manière générale aussi hauts que larges, et ceux de grande hauteur, à savoir de grande contenance, qui sont plus hauts que larges. On comprendra que seuls les sacs dits big bag de petite hauteur peuvent être transportés sur la plateforme d'un véhicule, puisque ceux de grande hauteur risqueraient de verser.

On connaît également le document EP 0 021 805 qui décrit un chariot élévateur pour venir prendre des charges disposées sur des palettes, qui n'est donc pas adapté au transbordement de sac de type dit big bag.

On connaît également par le document DE 32 23 159, un dispositif de manutention comprenant une remorque équipée de moyens élévateurs portés par un portique monté basculant sur ladite remorque selon un axe horizontal, lesdits moyens élévateurs étant conçus aptes à saisir une charge en vue de la poser au sol ou de la déposer sur la plateforme de ladite remorque. Pour pallier l'inconvénient du dispositif du document FR 2 802 905, à savoir celui du contournement du bord de la plateforme de la remorque, il est prévu de pouvoir enlever une partie du plancher de cette dernière. Cela facilite les opérations de chargement et de déchargement d'une charge, mais ce dispositif de manutention n'est cependant pas adapté à la manutention et au transport d'un sac de type dit big bag de grande contenance, et encore moins de plusieurs de ces sacs.

L'invention a pour but de pallier les inconvénients de l'état de la technique en proposant un dispositif de manutention d'un sac de type dit big bag, de conception simple et peu coûteuse, assurant une bonne prise du sac, ne nécessitant pas de le soulever sur une hauteur importante, et permettant de transporter aussi bien des sacs de petite hauteur que de grande hauteur.

La présente invention a ainsi pour objet un dispositif de manutention et de transport d'un sac de chantier de grande contenance de type dit big bag, constitué d'une remorque pourvue, d'une part, de moyens de levage dudit sac et, d'autre part, de moyens de réception dudit sac en chargement sur ladite remorque, lesdits moyens de levage étant motorisés pour lever ledit sac et le déposer sur lesdits moyens de réception, et inversement, et il se caractérise en ce que lesdits moyens de réception sont montés mobiles par rapport au châssis de ladite remorque, de manière à passer d'une position escamotée à une position de réception, et inversement, et en ce que ladite remorque comporte des moyens latéraux de maintien du sac, de manière à entourer ledit sac en chargement, et le maintenir latéralement pendant son transport.

Selon une autre caractéristique de l'invention, les moyens de levage comportent une potence prévue mobile en translation selon au moins une composante verticale par rapport à ladite remorque.

Selon une autre caractéristique de l'invention, les moyens de levage sont articulés sur le châssis en sorte de pouvoir passer d'une position déployée à une position repliée, respectivement pour venir lever le sac et le déposer sur les moyens de réception, et inversement.

Cette construction permet le débattement des moyens de levage, et autorise la manutention de plus d'un sac de grande contenance.

Selon une autre caractéristique de l'invention, les moyens de levage comportent des bras de levage articulés par leur base, en rotation sur la remorque, et mus sous l'action d'un ou plusieurs vérins.

Selon une autre caractéristique de l'invention, les moyens de levage comportent un cadre de suspension, comprenant inférieurement des moyens d'accrochage des anses du sac pour effectuer les opérations de chargement et de déchargement.

Selon encore une autre caractéristique de l'invention, les bras de levage comportent à leur extrémité non montée pivotante sur la remorque, des bras de déport qui portent le cadre de suspension, et qui sont montés pivotants sur lesdits bras de levage et mus pas des vérins, en sorte de constituer avec ceux-ci une structure déformable garantissant l'horizontalité dudit cadre de suspension.

D'autres caractéristiques et avantages de l'invention ressortiront de la description détaillée qui va suivre des modes de réalisation non limitatifs de l'invention, en référence aux figures annexées dans lesquelles :
- la figure 1 représente de façon schématisée et en perspective de trois quart arrière, un dispositif de manutention d'un sac de chantier de type dit big bag selon un premier mode de réalisation et dans une position déployée;
- la figure 2 représente de façon schématisée et en perspective de trois quart avant, le même dispositif de manutention dans une position repliée;
- la figure 3 représente de façon schématisée et en perspective trois quart arrière, un dispositif de manutention d'un sac de chantier selon un second mode de réalisation, dans une position déployée;
- la figure 4 représente de façon schématisée en élévation de profil du même dispositif de manutention d'un sac de chantier, dans une position repliée.

La présente invention entre dans le domaine du transport et de la manutention de charge.

L'invention concerne plus particulièrement le transport et la manutention de charge contenue dans un sac de grande contenance, de type dit « big bag ».

On notera qu'au sens de l'invention ledit sac de type big bag est constitué par une enveloppe en matériau tissé de manière à améliorer sa résistance, notamment contre l'arrachement. Cette enveloppe est ouverte en partie supérieure et comprend des anses au niveau de ses bords périphériques

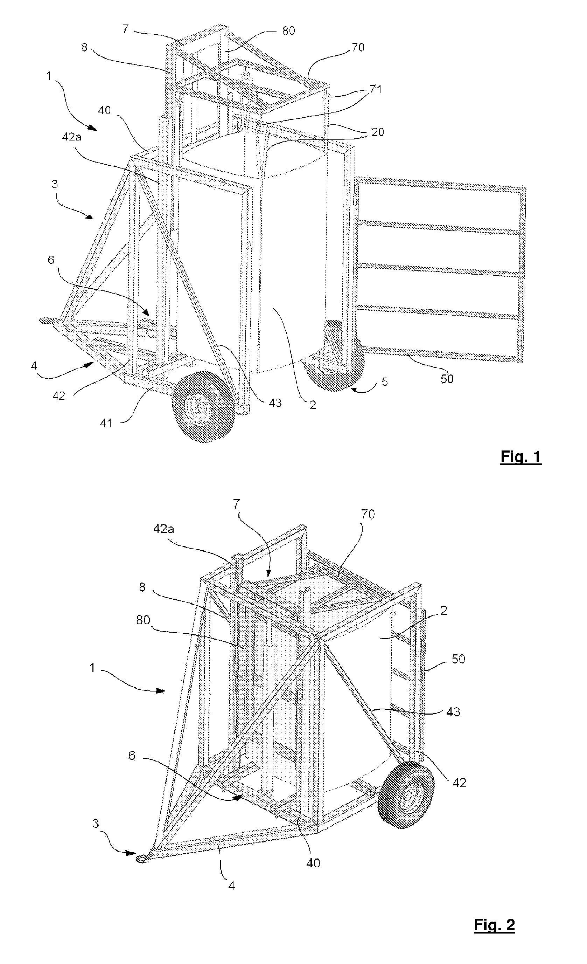

Tel que visible sur la figure 1, l'invention concerne un dispositif 1 de manutention et de transport d'un sac 2 de chantier de grande contenance de type big bag muni d'anses 20, comprenant une remorque 3, qui comporte un châssis 4 supportant un essieu pourvu de moyens de roulement, et un attelage permettant au dispositif 1 d'être tracter.

En particulier, le châssis 4 est constitué de traverses 40, de longerons 41 et de montants 42 qui viennent former une structure. Plus précisément, d'une part, les traverses 40 s'étendent transversalement tandis que les longerons 41 s'étendent longitudinalement en partie haute et basse de la structure et, d'autre part, les montants 42 sont verticaux, préférentiellement orthogonaux aux plans intégrant les traverses 40 et les longerons 41. Les montants 42 servent alors de jonction entre les traverses 40 et longerons 41 en partie basse et ceux en partie haute. Par ailleurs, des barres de renfort 43 peuvent être adjointes, notamment en biais ou inclinée, de manière à renforcer l'ensemble de la structure et à maintenir les sac 2 latéralement.

Ainsi, cette dernière présente une forme générale de cage apte à recevoir en chargement ledit sac 2 et l'entourer en vue de son transport.

De plus, la structure comprend, selon l'invention, en face arrière, une ouverture 5 pour le passage dudit sac 2 au cours des étapes de chargement et de déchargement. Comme visible sur les figures, cette ouverture 5 présente des moyens de fermeture 50 montés en face arrière, à l'opposée desdits moyens d'attache côté véhicule. Ces moyens de fermeture 50 se présentent sous la forme d'un ouvrant monté en rotation, par l'intermédiaire de charnières ou tous moyens adaptés, sur les montants 42 de la face arrière de ladite structure.

Comme évoqué précédemment, cette remorque 3 comporte encore des moyens de réception 6 destinés à recevoir le sac 2. En particulier, des tels moyens de réception 6 présentent une configuration et des caractéristiques suffisantes pour soutenir la charge dudit sac 2.

Pour ce faire, ils sont constitués par au moins une partie des traverses 40 situées en partie basse de la structure. Ces moyens de réception 6 composent ainsi au moins une partie du fond du châssis 4, tel un plancher, sur lequel vient reposer le sac 2 lors du transport.

En particulier, les traverses 40 constituant lesdits moyens de réception 6 peuvent être rendues solidaires desdits longerons situés en partie basse. Les traverses 40 sont réparties régulièrement le long des longerons 41 de façon à former un plancher.

Selon l'invention, comme cela est visible sur la figure 1, les moyens de réception 6 sont montés mobiles par rapport au châssis 4, de manière à passer d'une position escamotée à une position de réception, et inversement. Le passage d'une position à une autre s'effectue par translation des moyens de réception 6 par rapport au châssis 4, notamment des traverses 40 par rapport à leurs longerons 41 supports respectifs. Ce passage peut aussi s'effectuer manuellement ou sous l'action de moyens de motorisation, notamment des vérins.

En outre, la position de réception permet de mettre en oeuvre le plancher sur lequel vient reposer le sac 2. En position escamotée, ce plancher laisse un espace de réception qui permet à la remorque 3 d'être amenée en roulant entourer le sac 2 pour son chargement. De manière générale, en position escamotée des moyens de réception 6, la structure et tout particulièrement l'espace de réception, présente forme globale en U, ouverte vers l'arrière.

Par ailleurs, on remarquera que pour effectuer les opérations de chargement et de déchargement du sac 2, la remorque 3 comporte des moyens de levage 7.

Ces derniers sont articulés et motorisés de manière à passer d'une position déployée à une position repliée, pour venir lever le sac 2 et le déposer sur lesdits moyens de réception 6, et inversement.

Pour ce faire, lesdits moyens de levage 7 comprennent un cadre de suspension 70, apte, en position déployée, à venir se positionner au-dessus du sac 2. En face inférieure, un tel cadre de suspension 70 présente des moyens d'accrochage 71 coopérant avec les anses 20 du sac 2 pour effectuer les opérations de chargement et de déchargement.

Selon les modes de réalisation visibles sur les figures, ces moyens d'accrochages 71 sont constitués par des crochets sur lesquels on vient insérer les anses 20. En l'occurrence les crochets 71 sont au nombre de quatre, associés chacun à une anse 20.

On notera que dans le cas de sac 2 à deux anses, on prévoit de disposer deux crochets sous le cadre 70, à l'aplomb de l'axe de rotation de ce cadre, espacés de la largeur du cadre. Dans le cas de sac à une anse, le crochet se trouve au centre du cadre. Il faut noter que notamment dans le cas de sac à une anse, le crochet peut être remplacé par une chape.

Dans l'un ou l'autre cas, les crochets 71 sont répartis sur ledit cadre de suspension 70 de manière à répartir équitablement la charge du sac 2 sur le cadre.

On notera que selon les modes préférentiels de réalisation, un tel cadre de suspension 70 présente une forme parallélépipédique, notamment un carré à chaque coin duquel sont fixés les crochets 71, qui font saillie inférieurement.

Les moyens de levage 7 peuvent être construits selon plusieurs modes de réalisation.

Selon un premier mode de réalisation, représenté sur les figures 1 et 2, lesdits moyens de levage 7 sont constitués par une potence 8 prévue mobile en translation selon au moins une composante verticale par rapport à la remorque 3.

Cette potence 8 est constituée, d'une part, par le cadre de suspension 70 et, d'autre part, par un bâti 80 lui-même monté en translation sur la structure. Le bâti 80 et le cadre de suspension 70 sont rendus solidaires entre eux, de manière rigide, avec notamment des barres de renfort obliques.

En particulier, ledit bâti 80 peut être monté coulissant à l'intérieur des montants 42 de la structure ou bien de montants verticaux supplémentaires 42a. Ces montants 42a forment alors une glissière permettant le glissement des bords du bâti 80 du bas vers le haut, et inversement.

Dans ce mode de réalisation, la potence mobile 8 est mise en déplacement de translation sous l'action d'au moins un vérin qui peut être relié, d'une part, au châssis 4 et, d'autre part, au bâti 80.

Ainsi, lors des étapes de chargement et de déchargement, on ouvre l'arrière de ladite remorque 3, on positionne le plancher 6 mobile en position escamotée, puis on déplace la remorque 3 pour venir la disposer autour du sac 2 reposant au sol. Une fois en position, les anses 20 du sac 2 sont passées autour des crochets 71 du cadre de suspension 70, puis la potence 8 est levée. Une fois en position haute, déployée, le plancher 6 est remis en position de manière à effacer l'espace de réception initial et constituer les moyens de réception sur lesquels le sac 2 est alors déposé, par abaissement de la potence 8 jusqu'à sa position repliée. L'ouverture arrière peut alors être refermée en vue du transport.

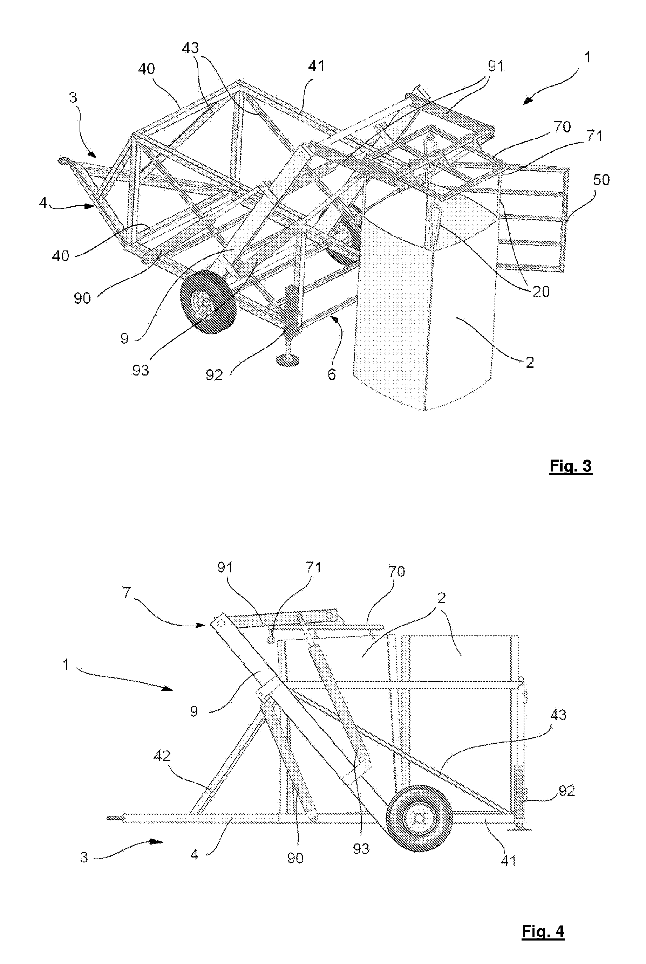

Selon un second mode de réalisation, visible sur les figures 3 et 4, les moyens de levage 7 sont constitués par des bras de levage 9 qui viennent suspendre au niveau de leurs extrémités hautes, en bascule, le cadre de suspension 70. En particulier, le cadre de suspension 70 est monté en pivotement sur un axe, rendu solidaire du centre du cadre, selon un axe de symétrie dans le sens des traverses 40, de manière à osciller, notamment permettre au sac 2 de conserver son aplomb vertical au moment du déplacement.

A ce titre, lesdits bras de levage 9 sont articulés à leur base, en rotation sur le châssis 4, et mus en déplacement sous l'action d'un ou plusieurs vérins 90.

Selon le mode de réalisation particulier, représenté sur les figures 3 et 4, des bras de déport 91 sont ajoutés entre les bras de levage 9 et le cadre de suspension 70. Les bras de déport 91 peuvent aussi être motorisés sous l'action de vérins 93, ces derniers étant asservis ou pilotés indépendamment par commande manuelle en fonction des vérins de motorisation 90 des bras de levage 9. Les bras de déport 91 sont montés en rotation sur les extrémités des bras de levage 9. L'ensemble des bras de levage 9 et de déport 91 est ainsi conformé en un parallélogramme déformable, permettant que les crochets 71 demeurent dans un plan horizontal.

Avantageusement, le basculement des moyens de lavage permet de charger plus d'un sac 2, en l'occurrence deux, ciolmme cela est visible sur la figure 4.

Tout particulièrement, l'action des vérins 90 sur les bras de levage 9 permettent la rotation de l'ensemble des moyens de levage 7 (cadre de suspension 70 et/ou bras de déport 91) en rotation par rapport au châssis 4.

Par ailleurs, on remarquera que dans ce mode de réalisation le dispositif 1 comporte au niveau de ces montants 42 en face arrière des vérins de blocage 92 venant interdire le mouvement du châssis 4 lors des opérations de chargement et/ou déchargement du sac 2.

Ainsi, lors des étapes de chargement et de déchargement, on ouvre l'arrière de ladite remorque 3, on le positionne devant ledit sac 2 reposant au sol. Une fois en position, les anses 20 du sac 2 sont passées autour des crochets 71 du cadre de suspension 70, puis le cadre de suspension 70 est mis en bascule par les bras de levage 9. Lors de ce basculement le bras de levage 9, déployé, vient déposer sur les moyens de réception 6 le sac 2, par abaissement des vérins 90 jusqu'à sa position repliée. L'ouverture arrière peut alors être refermée en vue du transport.

On notera que les montants et notamment les longerons 41 situés en partie haute permettent de maintenir le sac en chargement, formant des appuis latéraux, évitant qu'il ne se renverse.

## Revendications

1. Dispositif (1) de manutention et de transport d'un sac (2) de chantier de grande contenance de type dit "big bag", constitué d'une remorque (3) pourvue, d'une part, de moyens de levage (7) dudit sac (2) et, d'autre part, de moyens de réception (6) dudit sac (2) en chargement sur ladite remorque (3), lesdits moyens de levage (7) étant motorisés pour lever ledit sac (2) et le déposer sur lesdits moyens de réception (6), et inversement, **caractérisé en ce que** lesdits moyens de réception (6) sont mobiles par rapport audit châssis (4), de manière à passer d'une position escamotée à une position de réception, et inversement, et **en ce que** ladite remorque (3) comporte des moyens latéraux (43, 50) de maintien du sac, de manière à entourer ledit sac (2) en chargement, et le maintenir latéralement pendant son transport.

2. Dispositif de manutention (1) selon la revendication 1, **caractérisé en ce que** les moyens de levage (7) comportent une potence (8) prévue mobile en translation selon au moins une composante verticale par rapport à la remorque (3).

3. Dispositif de manutention (1) selon la revendication 1 ou la revendication 2, **caractérisé en ce que** les moyens de levage (7) sont articulés sur le châssis (4) en sorte de pouvoir passer d'une position déployée à une position repliée, respectivement pour venir lever le sac (2) et le déposer sur les moyens de réception 6), et inversement.

4. Dispositif de manutention (1) selon la revendication 3, **caractérisé en ce que** les moyens de levage (7) comportent des bras de levage (9) articulés par leur base, en rotation sur la remorque (3), et mus sous l'action d'un ou plusieurs vérins (90).

5. Dispositif de manutention (1) selon l'une quelconque des revendications précédentes, **caractérisé en ce que** les moyens de levage comportent un cadre de suspension (70), comprenant inférieurement des moyens d'accrochage des anses (20) du sac (2) pour effectuer les opérations de chargement et de déchargement.

6. Dispositif de manutention (1) selon l'une quelconque des revendications 3 à 5, **caractérisé en ce que** les bras de levage (9) comportent à leur extrémité non montée pivotante sur la remorque, des bras de déport (91) qui portent le cadre de suspension (70), et qui sont montés pivotants sur lesdits bras de levage (9) et mus pas des vérins (93), en sorte de constituer avec ceux-ci une structure déformable garantissant l'horizontalité dudit cadre de suspension (70).
